# EUROPEAN PATENT SPECIFICATION

(11) **EP 4 307 648 B1**
(45) Date of publication and mention of the grant of the patent: **21.05.2025**
(21) Application number: 23705197.4
(22) Date of filing: 16.02.2023
(51) Int. Cl.: H04M 1/02, H04M 1/03, G06F 1/16, C09J 9/00, H04M 1/18

(54) **ELECTRONIC APPARATUS INCLUDING STRUCTURE FOR CONNECTING ADHESIVE MEMBERS**
ELEKTRONISCHE VORRICHTUNG MIT STRUKTUR ZUR VERBINDUNG VON HAFTELEMENTEN
APPAREIL ÉLECTRONIQUE COMPRENANT UNE STRUCTURE POUR CONNECTER DES ÉLÉMENTS ADHÉSIFS

(30) Priority: 02.06.2022 KR 20220067817; 26.07.2022 KR 20220092717
(43) Date of publication of application: 17.01.2024
(73) Proprietor: Samsung Electronics Co., Ltd., Suwon-si, Gyeonggi-do 16677 (KR)
(72) Inventor: ROH, Hyunyoung, Suwon-si, Gyeonggi-do 16677 (KR)
(74) Representative: Arnold & Siedsma
(86) International application number: PCT/KR2023/002299
(87) International publication number: WO 2023/234519

(56) References cited:
- CN-A- 109 739 393
- KR-A- 20200 046 628
- KR-A- 20210 001 050
- KR-A- 20220 017 111
- KR-A- 20220 017 316
- US-A1- 2017 099 742
- US-A1- 2019 098 121

## Description

### [Technical Field]

The present disclosure relates to an electronic device including a structure for connecting adhesive members.

### [Background Art]

An electronic device may include a plurality of electronic components for providing various functions to a user. For example, the electronic device may include a display for providing visual information to a user. The display may form the electronic device through coupling with the component of the electronic device for supporting the display.

In accordance with its abstract, in patent application publication US2017099742A1, an electronic device including a waterproof structure is provided. The electronic device includes a housing that includes a first face, a second face that faces in a direction substantially opposite to the first face, and a side surface that at least partially encloses a space between the first face and the second face, a middle plate arranged between the first face and the second face inside the housing to be substantially parallel to the first face, extending from the side surface, and including at least one opening, a printed circuit board arranged between the middle plate and the second face, a display arranged between the middle plate and the first face, and including a face directed toward the second face, and a seal member configured to hermetically seal the at least one opening of the middle plate, and arranged between the face of the display and the middle plate.

In accordance with its abstract, patent application publication CN109739393A1 relates to a touch display module, an intelligent terminal and an attaching method, the touch display module comprises a protective cover plate, a touch panel, a gasket and optical cement, the touch panel and the protective cover plate are attached to each other, and the touch panel comprises a touch area and a non-touch area connected with the touch area; the display panel comprises a display area and a non-display area connected with the display area, the projection of the display area on the reference plane coincides with the projection of the touch area on the reference plane, or the projection of the display area on the reference plane is located in the area where the projection of the touch area on the reference plane is located, and the reference plane is a plane perpendicular to the thickness direction of the touch display module; the gasket is arranged between the protection cover plate and the touch panel, a through hole penetrating through the first surface and the second surface is formed in the gasket, and a glue injection hole communicating with the through hole is formed in the outer side face; and the optical cement is filled in the through holes through the glue injection holes and fully distributed in the through holes. The bonding strength between the touch panel and the display panel is improved.

### [Disclosure]

### [Technical Problem]

As a display is disposed on a component (e.g., a housing) for supporting a display, a gap may be formed between the display and the component. In order to suppress an inflow of a foreign substance, such as dust and/or water, through the gap, an electronic device may include a plurality of adhesive members disposed between the display and the component. In case that the plurality of adhesive members are spaced apart from each other, the foreign substance may flow in through a space between the plurality of adhesive members. The electronic device may need a structure for connecting the plurality of adhesive members to suppress the inflow of the foreign substance.

The technical problems to be achieved in this document are not limited to those described above, and other technical problems not mentioned herein will be clearly understood by those having ordinary knowledge in the art to which the present disclosure belongs, from the following description.

### [Technical Solution]

The invention is set out in the appended claims.

### [Advantageous Effects]

An electronic device according to an embodiment can provide a structure capable of preventing an inflow of a foreign substance through a gap between a display and a housing by adhesive members connected to each other. Alternatively or additionally, an electronic device according to an embodiment may provide a structure wherein the use of an integrated, one-piece waterproof tape in the form of a closed loop, for providing a waterproof and/or dustproof connection of a display to the housing is not needed. Such integrated waterproof tape extending in closed loop around the display may increase the material costs for the electronic device considerably. Furthermore, it may be difficult to fix such integrated, one-piece loop-shaped waterproof tape to the electronic device and the size of the closed loop tape should be adapted to the size of the display to be connected. This may reduce assemblability of the electronic device and/or may increase assembly costs.

The effects that can be obtained from the present disclosure are not limited to those described above, and any other effects not mentioned herein will be clearly understood by those having ordinary knowledge in the art to which the present disclosure belongs, from the following description.

### [Description of the Drawings]

FIG. 1 is a block diagram of an electronic device in a network environment according to various embodiments.
FIG. 2A is a perspective view of an electronic device according to an embodiment.
FIG. 2B is an exploded perspective view of an electronic device according to an embodiment.
FIG. 2C is a top plain view of a housing of an electronic device according to an embodiment.
FIG. 3A is an enlarged perspective view of a housing of an electronic device according to an embodiment.
FIG. 3B is an enlarged perspective view of a housing of an electronic device according to an embodiment.
FIG. 4 is a cross-sectional view illustrating an example in which an electronic device according to an embodiment is cut along A-A' of FIG. 2A.
FIG. 5 is a cross-sectional view illustrating an example in which an electronic device according to an exemplary embodiment is cut.
FIG. 6 is a top plain view of a housing of an electronic device according to an embodiment.

### [Mode for Invention]

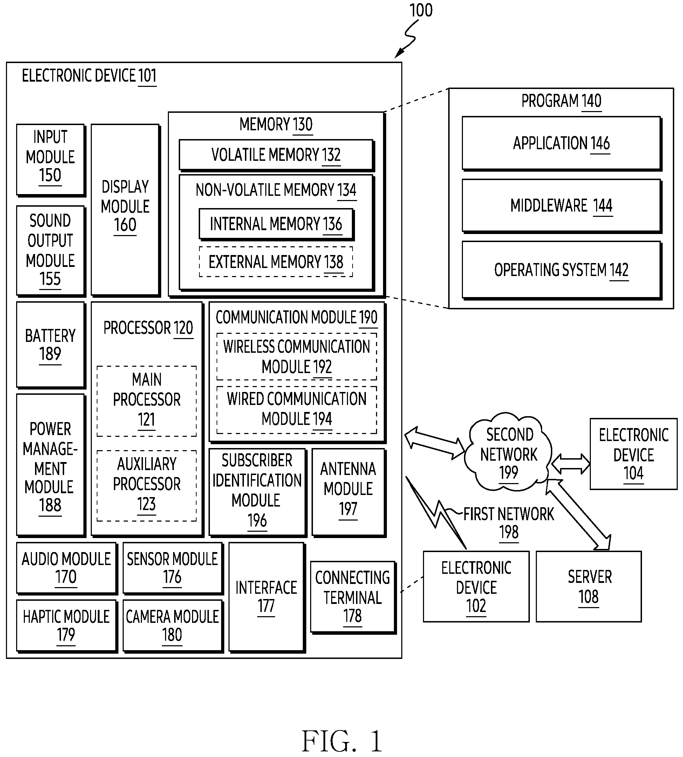

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

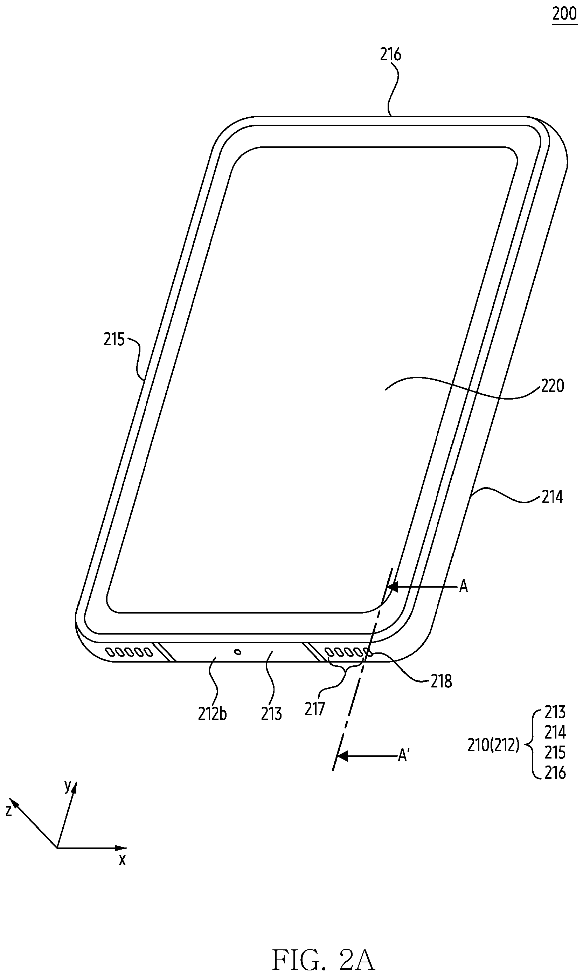

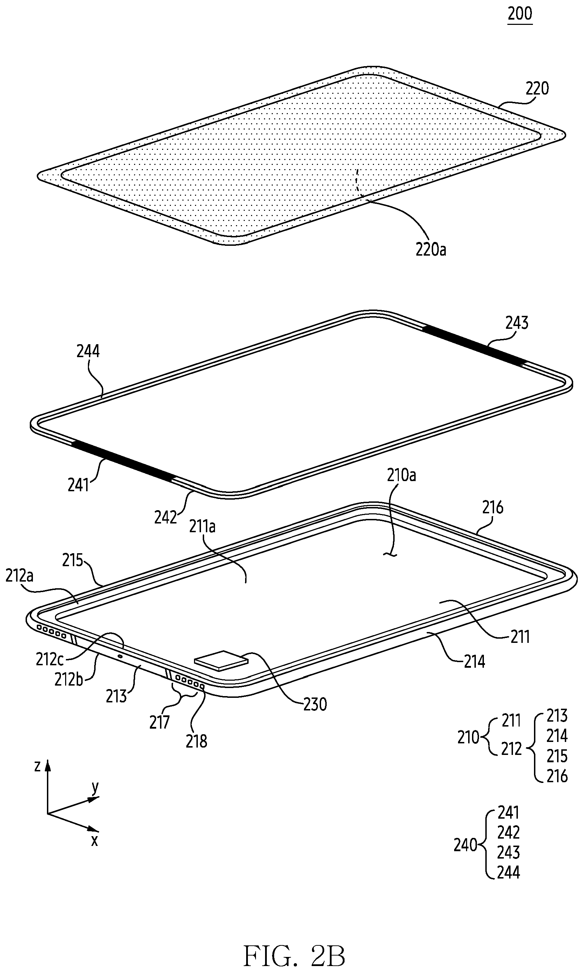

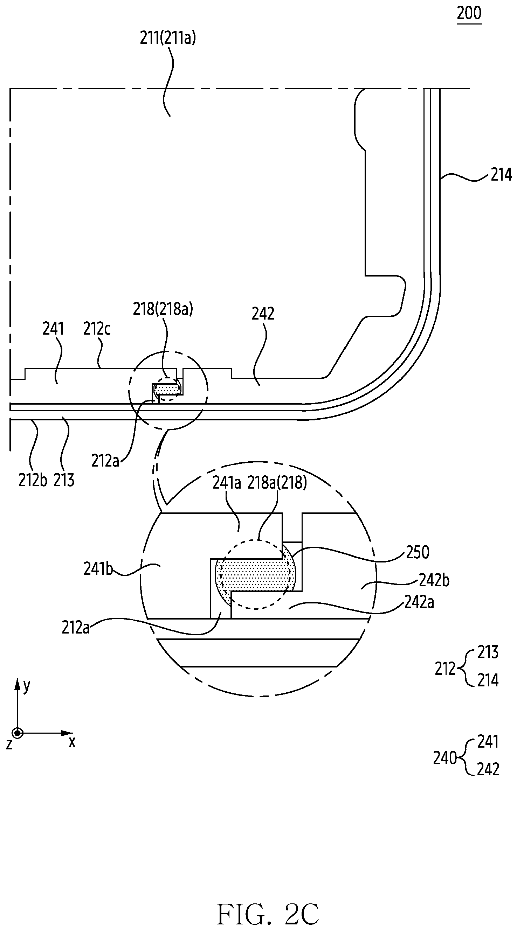

FIG. 2A is a perspective view of an electronic device according to an embodiment, FIG. 2B is an exploded perspective view of an electronic device according to an embodiment, and FIG. 2C is a top plain view of a housing of an electronic device according to an embodiment.

Referring to FIGS. 2A, 2B, and 2C, an electronic device 200 (e.g., an electronic device 101 of FIG. 1) according to an embodiment includes a housing 210, and a display 220 (e.g., a display module 160 of FIG. 1), and may include a speaker 230 (e.g., an audio module 170 of FIG. 1), and includes a plurality of adhesive members 240 and a sealing member 250.

According to an embodiment, the housing 210 may define at least a part of an outer surface of the electronic device 200. The housing 210 may define an inner space 210a for mounting various components of the electronic device 200. The housing 210 includes a base 211 and a sidewall structure 212. The base 211 may define at least a part of the outer surface of the electronic device 200 together with the sidewall structure 212. For example, the base 211 may define a rear surface of the electronic device 200. The rear surface of the electronic device 200 may mean a surface opposite to a front surface of the electronic device 200 on which the display 220 is disposed. According to an embodiment, the base 211 may include an accommodating surface 211a. The accommodating surface 211a may mean an inner surface of the base 211 facing the display 220 and being substantially parallel to one surface 220a of the display 220. The accommodating surface 211a of the base 211 may be opposite to the rear surface of the electronic device 200. According to an embodiment, the base 211 may define the inner space 210a of the housing 210 together with the sidewall structure 212.

The sidewall structure 212 supports the display 220. According to an embodiment, the sidewall structure 212 is disposed at a periphery of the base 211. The periphery may mean a region including a boundary distinguishing the one component from other components among regions included in one component, and corresponding expression may be used below in the same manner unless otherwise noted. For example, the sidewall structure 212 may be disposed on the base 211 and may surround the periphery of the display 220. The sidewall structure 212 may define at least a part of a side surface of the electronic device 200. For example, the side surface of the electronic device 200 may mean the outer surface of the electronic device 200 surrounding the front surface and/or the rear surface of the electronic device 200. The side surface of the electronic device 200 may be perpendicular to the front surface of the electronic device 200.

The sidewall structure 212 may includes a supporting surface 212a, an outer surface 212b, and an inner surface 212c. The supporting surface 212a supports the display 220. According to an embodiment, the supporting surface 212a may face the periphery of the display 220. The supporting surface 212a may be substantially parallel to the one surface 220a of the display 220 facing the inner space 210a. The supporting surface 212a may be spaced apart from the accommodating surface 211a of the base 211. For example, the supporting surface 212a may be disposed between the one surface 220a of the display 220 and the accommodating surface 211a of the base 211. The outer surface 212b of the sidewall structure 212 may face outside of the electronic device 200 and define the side surface of the electronic device 200. The outer surface 212b may surround the display 220 and surrounds the supporting surface 212a. For example, the outer surface 212b may be substantially perpendicular to the supporting surface 212a, but is not limited thereto. According to embodiments, the outer surface 212b of the sidewall structure 212 may have a curved shape to have a curvature.

According to an embodiment, the sidewall structure 212 may include a first sidewall 213, a second sidewall 214, a third sidewall 215, and a fourth sidewall 216. The first sidewall 213 may extend on the base 211 in a first direction (e.g., +x direction). The second sidewall 214 may extend on the base 211 to be perpendicular to the first sidewall 213. For example, the second sidewall 214 may extend in a second direction (e.g., +y direction) perpendicular to the first direction from one end of the first sidewall 213 facing the first direction. The third sidewall 215 may extend on the base 211 to be perpendicular to the first sidewall 213. For example, the third sidewall 215 may extend in the second direction from the other end of the first sidewall 213 facing a direction (e.g., -x direction) opposite to the first direction. The third sidewall 215 may be parallel to the second sidewall 214. The third sidewall 215 may face the second sidewall 214 and may be spaced apart from the second sidewall 214 in the direction (e.g., the -x direction) opposite to the first direction. The fourth sidewall 216 may be parallel to the first sidewall 213. For example, the fourth sidewall 216 may extend in the first direction between one end of the second sidewall 214 facing the second direction (e.g., the +y direction) and one end of the third sidewall 215. The fourth sidewall 216 may face the first sidewall 213 and may be spaced apart from the first sidewall 213 in the second direction.

According to an embodiment, the plurality of sidewalls 213, 214, 215, and 216 may be in contact with each other to define a plurality of corners of the housing 210. For example, the plurality of corners may be disposed in a region where the first sidewall 213 and the second sidewall 214 are in contact, a region where the first sidewall 213 and the third sidewall 215 are in contact, a region where the second sidewall 214 and the fourth sidewall 216 are in contact. According to an embodiment, the plurality of corners of the housing 210 may have the curvature and be bent, but is not limited thereto. According to embodiments, at least a part of the plurality of corners may not have the curvature as the plurality of sidewalls 213, 214, 215, and 216 contact each other vertically.

The display 220 may be configured to provide visual information to a user. According to an embodiment, the display 220 may be disposed on the housing 210 to define at least a part of the front surface of the electronic device 200. For example, the front surface of the electronic device 200 may be defined by the display 220 and the sidewall structure 212 surrounding the periphery of the display 220. According to an embodiment, the display 220 may be disposed on the sidewall structure 212 of the housing 210. For example, the display 220 may be disposed on the supporting surface 212a of the sidewall structure 212. The display 220 may be spaced apart from the accommodating surface 211a of the base 211. According to an embodiment, the display 220 may include a plurality of layers stacked in order. For example, the plurality of layers may include a thin film transistor (TFT) and a light emitting layer including a plurality of pixels controlled by the TFT. The plurality of pixels included in the light emitting layer may emit light toward the outside of the electronic device 200 based on current or voltage supplied from the TFT. According to an embodiment, the display 220 may include a display driving integrated circuit (DDI) that controls an operation of the plurality of layers.

The speaker 230 may be configured to output audio information to the user. According to an embodiment, the speaker 230 may be disposed inside of the housing 210. For example, the speaker 230 may be disposed on the accommodating surface 211a of the base 211 parallel to the supporting surface 212a. According to an embodiment, the housing 210 may include at least one speaker hole 217. The at least one speaker hole 217 may transmit audio output from the speaker 230 disposed in the housing 210 to outside of the housing 210. The at least one speaker hole 217 connects the inner space 210a of the housing 210 to the outside of the housing 210. The at least one speaker hole 217 extends from the outer surface 212b of the sidewall structure 212 to the inner surface 212c of the sidewall structure 212 opposite to the outer surface 212b. According to an embodiment, the at least one speaker hole 217 may be disposed on at least one of the first sidewall 213 and the fourth sidewall 216. According to an embodiment, the at least one speaker hole 217 may include a plurality of speaker holes spaced apart from each other, but is not limited thereto. According to embodiments, the at least one speaker hole 217 may include one hole extending long in the first direction (e.g., the +x direction). In case that at least one hole has a long-extended shape, a grid may be disposed on the at least one hole.

The housing 210 may includes a through-hole 218 connecting the outside of the housing 210 and the inside of the housing 210. The through-hole 218 extends from the outer surface 212b of the sidewall structure 212 to the supporting surface 212a of the sidewall structure 212. According to an embodiment, a position of the through-hole 218 may correspond to a position of the at least one speaker hole 217. For example, in case that the at least one speaker hole 217 is disposed on the first sidewall 213, the through-hole 218 may be disposed on the first sidewall 213 to be adjacent to the at least one speaker hole 217. According to an embodiment, one end 218a of the through-hole 218 disposed on the supporting surface 212a may be covered by the display 220. As it is covered by the display 220, the one end 218a of the through-hole 218 may not be visible from the outside of the electronic device 200.

The plurality of adhesive members 240 may suppress an inflow of a foreign substance (e.g., moisture or dust) through a gap between the housing 210 and the display 220. According to an embodiment, the plurality of adhesive members 240 may be disposed on the sidewall structure 212 of the housing 210. For example, the plurality of adhesive members 240 may be disposed on the supporting surface 212a of the sidewall structure 212 to be in contact with the periphery of the display 220. According to an embodiment, the plurality of adhesive members 240 may attach the display 220 to the housing 210. For example, the plurality of adhesive members 240 may be interposed between the display 220 and the housing 210. The plurality of adhesive members 240 may include an adhesive material that attaches the display 220 to the supporting surface 212a. The plurality of adhesive members 240 may maintain coupling between the housing 210 and the display 220 by the adhesive material. For example, the plurality of adhesive members 240 may be a tape including the adhesive material, but is not limited thereto. According to an embodiment, the plurality of adhesive members 240 may be spaced apart from each other.

The plurality of adhesive members 240 include a first adhesive member 241, and a second adhesive member 242, and may include a third adhesive member 243, and a fourth adhesive member 244. The first adhesive member 241 may be disposed on the supporting surface 212a and may extend along a part of the first sidewall 213. For example, the first adhesive member 241 may extend in the first direction on a part of the first sidewall 213. A length of the first adhesive member 241 extending in the first direction may be shorter than a length of the first sidewall 213. The second adhesive member 242 may be spaced apart from the first adhesive member 241 and may be disposed on the supporting surface 212a. The second adhesive member 242 may extend along another part of the first sidewall 213 and the second sidewall 214. The second adhesive member 242 may extend along a part of the fourth sidewall 216. For example, the second adhesive member 242 may extend in the first direction on another part of the first sidewall 213 and may extend in the second direction perpendicular to the first direction on the second sidewall 214. A length of the second adhesive member 242 extending in the second direction may correspond to a length of the second sidewall 214. The second adhesive member 242 may extend in the first direction on a part of the fourth sidewall 216. The third adhesive member 243 may be symmetrical to the first adhesive member 241 with respect to the display 220. For example, the third adhesive member 243 may extend along another part of the fourth sidewall 216. The fourth adhesive member 244 may be symmetrical to the second adhesive member 242 with respect to the display 220. For example, the fourth adhesive member 244 may extend along still another part of the first sidewall 213, the third sidewall 215, and still another part of the fourth sidewall 216.

Although FIG. 2B illustrates that the number of the plurality of adhesive members 240 is 4, the number of the adhesive member is not limited thereto. According to embodiments, the number of the plurality of adhesive members 240 may be 2. For example, the plurality of adhesive members 240 may include the first adhesive member 241 and the second adhesive member 242. In case that the number of the plurality of adhesive members 240 is 2, the first adhesive member 241 may extend along a part of the first sidewall 213, and the second adhesive member 242 may extend along another part of the first sidewall 213, the second sidewall 214, the third sidewall 215, and the fourth sidewall 216.

According to an embodiment, a position where the plurality of adhesive members 240 are segmented may correspond to a position of the through-hole 218 on the supporting surface 212a. For example, the first adhesive member 241 and the second adhesive member 242 may be spaced apart from each other with respect to the through-hole 218. A part of the one end 218a of the through-hole 218 disposed on the supporting surface 212a is covered by the first adhesive member 241 and the second adhesive member 242. For example, the first adhesive member 241 may cover a part of the one end 218a of the through-hole 218 disposed on the supporting surface 212a. The second adhesive member 242 may cover another part of one end 218a of the through-hole 218. The second adhesive member 242 is spaced apart from the first adhesive member 241 on the one end 218a of the through-hole 218.

According to an embodiment, the first adhesive member 241 may include a first extending portion 241a covering a part of the one end 218a of the through-hole 218 disposed on the supporting surface 212a and a second extending portion 241b connected to the first extending portion 241a and having a width wider than that of the first extending portion 241a. For example, the second extending portion 241b may extend in a direction (e.g., the -x direction) away from the through-hole 218 from the first extending portion 241a. A width of one component may mean a length of the one component in the second direction (e.g., the +y direction), and unless otherwise noted, the corresponding expression may be used below in the same manner. According to an embodiment, the second adhesive member 242 may include a third extending portion 242a covering another part of the one end 218a of the through-hole 218 disposed on the supporting surface 212a and a fourth extending portion 242b connected to the third extending portion 242a and having a width wider than that of the third extending portion 242a. The fourth extending portion 242b may extend in a direction (e.g., the +x direction) away from the through-hole 218 from the third extending portion 242a. The fourth extending portion 242b may face the second extending portion 241b and may extend in a direction opposite to an extending direction of the second extending portion 241b.

The sealing member 250 may suppress the inflow of the foreign substance (e.g., moisture or dust) through the gap between the housing 210 and the display 220. he sealing member 250 connects the plurality of adhesive members 240. For example, the sealing member 250 may be disposed between the first adhesive member 241 and the second adhesive member 242 to connect the first adhesive member 241 and the second adhesive member 242. As the sealing member 250 connects the plurality of adhesive members 240, a closed loop may be defined on the supporting surface 212a of the sidewall structure 212 together with the plurality of adhesive members 240. According to an embodiment, a structure of the closed loop formed through the plurality of adhesive members 240 and the sealing member 250 may reduce the inflow of the moisture or the foreign substance from the outside of the electronic device 200. For example, the plurality of adhesive members 240 and the sealing member 250 may fill the gap between the display 220 and the housing 210. The plurality of adhesive members 240 and the sealing member 250 may isolate inside of the electronic device 200 from the outside of the electronic device 200.

According to an embodiment, the sealing member 250 may fill a gap between the plurality of adhesive members 240. For example, the sealing member 250 may fill a gap between the first adhesive member 241 and the second adhesive member 242. In case that the first adhesive member 241 and the second adhesive member 242 overlap each other, the coupling between the display 220 and the housing 210 may be unstable due to a step generated by the overlap of the first adhesive member 241 and the second adhesive member 242. In case that the plurality of adhesive members 240 are integrally manufactured to prevent formation of the step, manufacturing cost of the electronic device 200 may increase. For stable coupling of the display 220 and the housing 210 and reduction of the manufacturing cost of the electronic device 200, the first adhesive member 241 and the second adhesive member 242 may be spaced apart from each other. As the first adhesive member 241 and the second adhesive member 242 are spaced apart from each other, the foreign substance (e.g., moisture or dust) may flow into the inside of the housing 210 through the gap between the first adhesive member 241 and the second adhesive member 242. The electronic device 200 according to an embodiment may provide a structure capable of suppressing the inflow of the foreign substance into the inside of the electronic device 200 by the sealing member 250 filling the gap between the first adhesive member 241 and the second adhesive member 242.

The sealing member 250 fills at least a part of the through-hole 218. For example, the sealing member 250 may fill the one end 218a of the through-hole 218 disposed on the supporting surface 212a. The sealing member 250 may be in contact with the first adhesive member 241 and the second adhesive member 242 covering the one end 218a of the through-hole 218 by filling the one end 218a of the through-hole 218. According to an embodiment, when the electronic device 200 is manufactured, the sealing member 250 may be formed by solidifying a solution containing silicon injected into the through-hole 218. For example, the sealing member 250 may include a curled in plastic gasket (CIPG), but is not limited thereto. When the electronic device 200 is manufactured, a solution for forming the sealing member 250 may be flowed in through the through-hole 218 in a state where the housing 210 and the display 220 are coupled by the plurality of adhesive members 240. The solution flowed in through the through-hole 218 may fill the one end 218a of the through-hole 218 on the supporting surface 212a. The solution flowed in through the through-hole 218 may connect the first adhesive member 241 and the second adhesive member 242 disposed on the supporting surface 212a. The electronic device 200 according to an embodiment may provide a structure of reducing the manufacturing cost of the electronic device 200 by the sealing member 250 formed by a relatively simple process.

As described above, the electronic device 200 according to an embodiment may provide the structure capable of suppressing the inflow of the foreign substance into the inside of the electronic device 200 by the sealing member 250 connecting the plurality of adhesive members 240. The electronic device 200 according to an embodiment may provide the structure of reducing the manufacturing cost of the electronic device 200 by the sealing member 250 disposed through the through-hole 218.

Meanwhile, the first adhesive member 241, the second adhesive member 242, and the sealing member 250 have been described as being disposed on the support surface 212 facing the display 220, but are not limited thereto. For example, when the housing 210 is formed of a sidewall structure 212 and a member defining the rear surface of the electronic device 200 opposite the display 220 defining the front surface of the electronic device 200, the first adhesive member 241, the second adhesive member 242, and the sealing member 250 may be placed between the member and the sidewall structure 212.

Hereinafter, a structure of embodiments will be described based on the first adhesive member 241 and the second adhesive member 242, but this is for convenience of description. The following description of the first adhesive member 241 and the second adhesive member 242 may be substantially equally applied to each of the plurality of adhesive members 240.

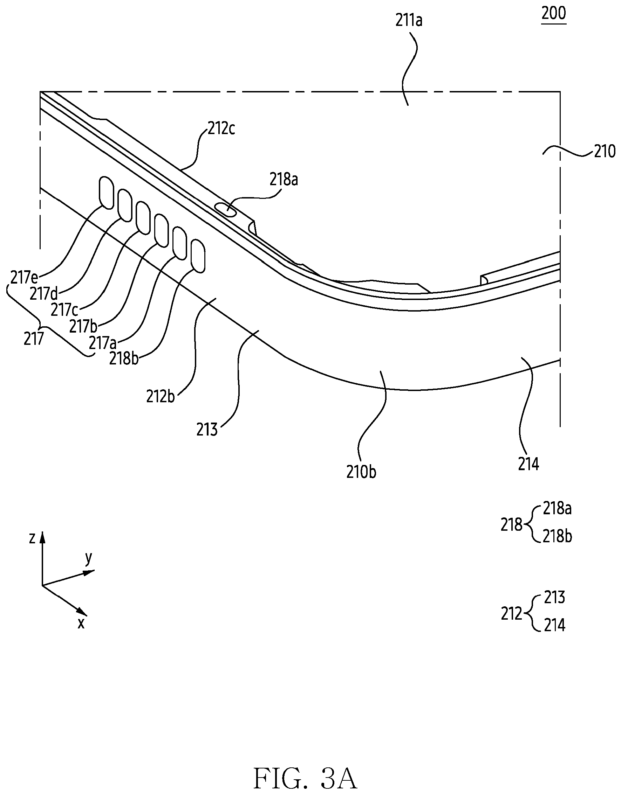

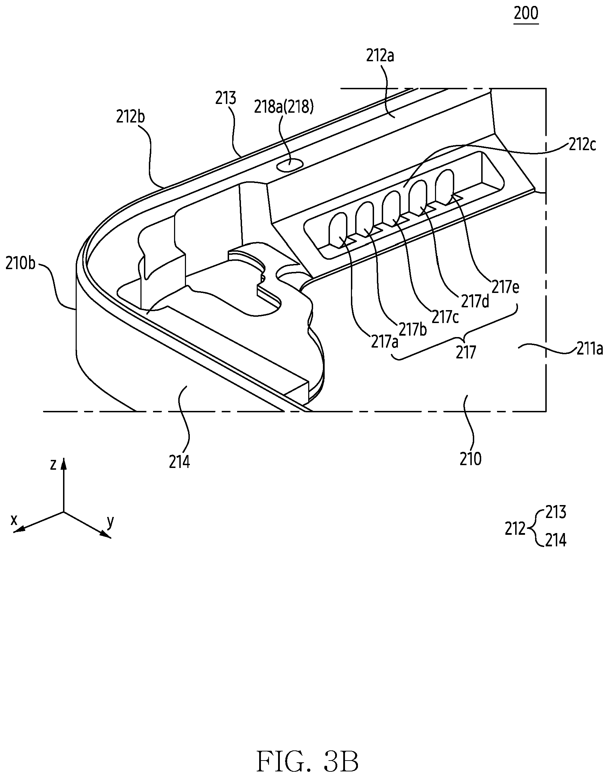

FIG. 3A is an enlarged perspective view of a housing of an electronic device according to an embodiment, and FIG. 3B is an enlarged perspective view of a housing of an electronic device according to an embodiment.

FIGS. 3A and 3B illustrate an example of a housing 210 in a state in which a plurality of adhesive members (e.g., a plurality of adhesive members 240 of FIGS. 2A, 2B, and 2C) and a sealing member (e.g., a sealing member 250 of FIG. 2C) are removed, respectively.

Referring to FIGS. 3A and 3B, at least one speaker hole 217 penetrates a sidewall structure 212The at least one speaker hole 217 penetrates a first sidewall 213 of the sidewall structure 212. According to an embodiment, the sidewall structure 212 may include a plurality of speaker holes 217a, 217b, 217c, 217d, and 217e spaced apart from each other. Each of the plurality of speaker holes 217a, 217b, 217c, 217d, and 217e may be spaced apart from each other in a first direction (e.g., +x direction) by a designated interval. For example, the first speaker hole 217a among the plurality of speaker holes 217a, 217b, 217c, 217d, and 217e may be spaced apart from the second speaker hole 217b by a first distance. According to an embodiment, the plurality of speaker holes 217a, 217b, 217c, 217d, and 217e may be parallel to each other. For example, each of the plurality of speaker holes 217a, 217b, 217c, 217d, and 217e may extend along a second direction (e.g., +y direction) from an outer surface 212b of the sidewall structure 212 to an inner surface 212c of the sidewall structure 212. According to an embodiment, a shape of one end of each of the plurality of speaker holes 217a, 217b, 217c, 217d, and 217e disposed on the outer surface 212b may be substantially the same as a shape of the other end of each of the plurality of speaker holes 217a, 217b, 217c, 217d, and 217e disposed on the inner surface 212c.

According to an embodiment, a through-hole 218 may be disposed close to the at least one speaker hole 217. For example, the through-hole 218 may be close to the first speaker hole 217a among the plurality of speaker holes 217a, 217b, 217c, 217d, and 217e. A corner 210b of the housing 210 in contact with the first sidewall 213 and a second sidewall 214 may be close to the through-hole 218 among the plurality of speaker holes 217a, 217b, 217c, 217d, and 217e, and the through-hole 218. The following description is described based on the through-hole 218 and the plurality of speaker holes 217a, 217b, 217c, 217d, and 217e, but embodiments are not limited thereto. For example, the through-hole 218 may be disposed close to other holes (not illustrated) included in the housing 210. A shape of the through-hole 218 may be substantially the same as the other holes included in the housing 210.

According to an embodiment, a shape of the other end 218b of the through-hole 218 disposed on the outer surface 212b of the sidewall structure 212 corresponds to a shape of one end of the at least one speaker hole 217 disposed on the outer surface 212b of the sidewall structure 212. For example, when viewed from the outside of the electronic device, a shape of the at least one speaker hole 217 is substantially corresponds to (or is substantially same with) a shape of the through-hole 218. For example, the shape of the other end 218b of the through-hole 218 may be substantially the same as the shape of the one end of the at least one speaker hole 217. For example, when the sidewall structure 212 is viewed in a direction perpendicular to the outer surface 212b (e.g., the +y direction), the shape of the through-hole 218 and a shape of the at least one speaker hole 217 may be the same each other. In a state in which the manufacture of the electronic device 200 is completed, unlike one end 218a of the through-hole 218 covered by a display (e.g., a display 220 of FIG. 2A and FIG. 2B), the other end 218b of the through-hole 218 may be visible from outside of the electronic device 200. In case that the shape of the other end 218b of the through-hole 218 is different from the shape of one end of the at least one speaker hole 217, appearance quality of the electronic device 200 may be degraded by the through-hole 218 for injecting the sealing member (e.g., the sealing member 250 of FIG. 2C). The electronic device 200 according to an embodiment may provide a structure having excellent appearance quality by the through-hole 218 having substantially the same shape as the at least one speaker hole 217 on the outer surface 212b of the sidewall structure 212.

According to an embodiment, an extending direction of the through-hole 218 may be different from an extending direction of the at least one speaker hole 217. For example, the at least one speaker hole 217 may extend from the outer surface 212b to the inner surface 212c of the sidewall structure 212, and the through-hole 218 may extend from the outer surface 212b to a supporting surface 212a perpendicular to the inner surface 212c of the sidewall structure 212. In case that the one end 218a of the through-hole 218 is disposed on the inner surface 212c, a solution for forming the sealing member 250 may be transmitted to the inner surface 212c. The solution for forming the sealing member 250 may be transmitted to an accommodating surface 211a through the inner surface 212c. A speaker disposed on the accommodating surface 211a (e.g., a speaker 230 of FIG. 2B) may be damaged by the solution transmitted to the accommodating surface 211a. The electronic device 200 according to an embodiment may provide a structure capable of preventing the solution for forming the sealing member 250 from being transmitted to the accommodating surface 211a when the electronic device 200 is manufactured, by the through-hole 218 extending in a direction distinct from the extending direction of the at least one speaker hole 217. The electronic device 200 according to an embodiment may provide a structure capable of preventing damage to the speaker 230 by the through-hole 218 preventing the solution from being transmitted to the accommodating surface 211a.

According to an embodiment, a distance between one speaker hole and another speaker hole among the plurality of speaker holes 217a, 217b, 217c, 217d, and 217e, on the outer surface 212b of the sidewall structure 212, may be the same as a distance between the one speaker hole and the through-hole 218, on the outer surface 212b of the sidewall structure 212. An interval between the plurality of speaker holes 217a, 217b, 217c, 217d, and 217e may be the same as the distance between the one speaker hole among the plurality of speaker holes 217a, 217b, 217c, 217d, and 217e and the through-hole 218. For example, on the outer surface 212b of the sidewall structure 212, the second speaker hole 217b may be spaced apart from the first speaker hole 217a by the first distance, and the through-hole 218 may be spaced apart from the first speaker hole 217a by the first distance. For another example, the other end 218b of the through-hole 218 disposed on the outer surface 212b of the sidewall structure 212 may be spaced apart from one end of the first speaker hole 217a disposed on the outer surface 212b of the sidewall structure 212 by the first distance. Since the distance between the through-hole 218 and the first speaker hole 217a on the outer surface 212b of the sidewall structure 212 is the same as the interval between the plurality of speaker holes 217a, 217b, 217c, 217d, and 217e, the through-hole 218 and the at least one speaker hole 217 may not be distinct from each other outside of the electronic device 200. Since the through-hole 218 and the at least one speaker hole 217 are not distinct from each other outside of the electronic device 200, the electronic device 200 according to an embodiment may provide the structure having the excellent appearance quality.

According to an embodiment, a shape of the one end 218a of the through-hole 218 disposed on the supporting surface 212a of the sidewall structure 212 may be different from the shape of the other end 218b of the through-hole 218 disposed on the outer surface 212b of the sidewall structure 212.

As described above, the electronic device 200 according to an embodiment may provide the structure having the excellent appearance quality while suppressing an inflow of a foreign substance into the electronic device 200 by the through-hole 218 having substantially the same shape as the at least one speaker hole 217 on the outer surface 212b of the sidewall structure 212.

In FIGS. 3A and 3B, the plurality of speaker holes 217a, 217b, 217c, 217d, and 217e are illustrated as being spaced apart from each other, but the embodiments are not limited thereto. For example, a part of the plurality of speaker holes 217a, 217b, 217c, 217d, and 217e and the through-hole 218 may be connected to each other. The part of the plurality of speaker holes 217a, 217b, 217c, 217d, and 217e may be connected to the other end 218b of the through-hole 218 on the outer surface 212b of the sidewall structure 212. Since the one end 218a of the through-hole 218 is disposed on the supporting surface 212a, another part of the plurality of speaker holes 217a, 217b, 217c, 217d, and 217e may be spaced apart from the through-hole 218 on the inner surface 212c of the sidewall structure 212. For another example, the through-hole 218 may be connected to the first speaker hole 217a inside of the sidewall structure 212. In case that the through-hole 218 and the first speaker hole 217a are connected to each other, the one end of the first speaker hole 217a disposed on the other end 218b of the through-hole 218 and the outer surface 212b of the sidewall structure 212 may define one hole. In case that the through-hole 218 and the first speaker hole 217a are connected to each other, the other end of the first speaker hole 217a may be disposed on the inner surface 212c of the sidewall structure 212, and the one end 218a of the through-hole 218 may be disposed on the supporting surface 212a of the sidewall structure 212. In case that the through-hole 218 and the first speaker hole 217a are connected to each other, audio output from the speaker 230 may pass through the other end of the first speaker hole 217a disposed on the inner surface 212c of the sidewall structure 212, and may be transmitted to the outside of the electronic device 200 through the one end of the first speaker hole 217a disposed on the outer surface 212b of the sidewall structure 212 and the other end 218b of the through-hole 218.

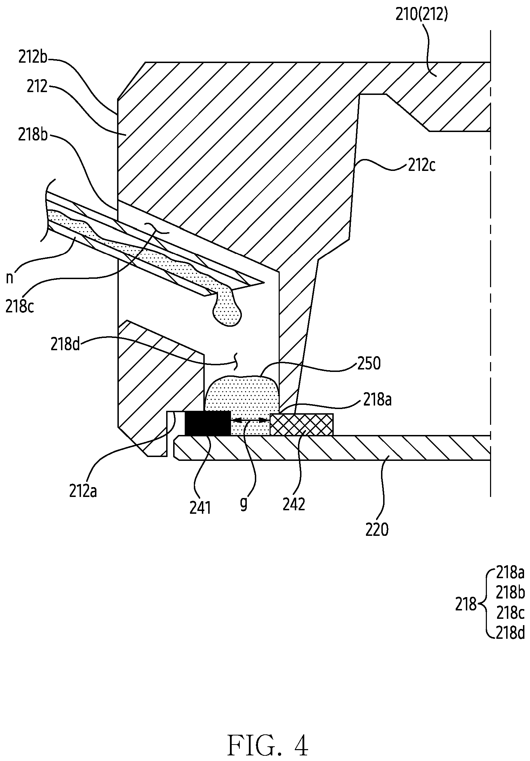

FIG. 4 is a cross-sectional view illustrating an example in which an electronic device according to an embodiment is cut along A-A' of FIG. 2A.

Referring to FIG. 4, according to an embodiment, a through-hole 218 may include a first region 218c and a second region 218d. The first region 218c may extend from an outer surface 212b of a sidewall structure 212 in a direction inclined with respect to the outer surface 212b. For example, the first region 218c may extend from the outer surface 212b of the sidewall structure 212 in a direction becoming closer to a supporting surface 212a. According to an embodiment, the first region 218c may define the other end 218b of the through-hole 218 disposed on the outer surface 212b of the sidewall structure 212. The second region 218d may be connected to the first region 218c and may extend from the first region 218c to the supporting surface 212a. The second region 218d may extend from the first region 218c to the supporting surface 212a in a direction perpendicular to the supporting surface 212a. The second region 218d may extend in a direction parallel to the outer surface 212b of the sidewall structure 212. According to an embodiment, the second region 218d may define one end 218a of the through-hole 218 disposed on the supporting surface 212a.

According to an embodiment, a first adhesive member 241 and a second adhesive member 242 may be spaced apart from each other on the one end 218a of the through-hole 218. A gap g may be formed between the first adhesive member 241 and the second adhesive member 242.

According to an embodiment, when the electronic device 200 is manufactured, a solution for forming the sealing member 250 may be flowed in between the first adhesive member 241 and the second adhesive member 242 through the through-hole 218 in a state where a display 220 is disposed on the supporting surface 212a. For example, the solution for forming the sealing member 250 may be flowed into the through-hole 218 through a needle n inserted into the through-hole 218. The solution flowed into the through-hole 218 may fill at least a part of the through-hole 218. For example, the solution flowed into the through-hole 218 may fill at least a part of the second region 218d of the through-hole 218. The solution flowed into the through-hole 218 may fill the gap g disposed between the first adhesive member 241 and the second adhesive member 242. The solution filling at least a part of the through-hole 218 and the gap g may be solidified to form the sealing member 250.

According to an embodiment, a contact area of the sealing member 250, the first adhesive member 241, and the second adhesive member 242 may be extended by the first adhesive member 241 and the second adhesive member 242 covering the one end 218a of the through-hole 218. For example, in case that the first adhesive member 241 and the second adhesive member 242 do not cover the one end 218a of the through-hole 218, the sealing member 250 may not contact one surface of the first adhesive member 241 and one surface of the second adhesive member 242 facing the second region 218d. As the contact area between the sealing member 250, the first adhesive member 241, and the second adhesive member 242 is reduced, coupling strength between the sealing member 250, the first adhesive member 241, and the second adhesive member 242 may be reduced. In case that the first adhesive member 241 and the second adhesive member 242 cover the one end 218a of the through-hole 218, as the sealing member 250 is in contact with the one surface of the first adhesive member 241 and the one surface of the second adhesive member 242 facing the second region 218d, the contact area between the sealing member 250, the first adhesive member 241, and the second adhesive member 242 may be relatively increased.

As described above, the electronic device 200 according to an embodiment may provide a structure in which the first adhesive member 241 and the second adhesive member 242 are easily coupled by the through-hole 218 connecting the outer surface 212b of the sidewall structure 212 and the supporting surface 212a. The electronic device 200 according to an embodiment may provide a structure in which the coupling strength between the sealing member 250, the first adhesive member 241, and the second adhesive member 242 is increased by the first adhesive member 241 and the second adhesive member 242 covering the one end 218a of the through-hole 218.

Meanwhile, although FIG. 4 illustrates that the through-hole 218 is spaced apart from an inner surface 212c of the sidewall structure 212, embodiments are not limited thereto. For example, the first region 218c of the through-hole 218 may extend from the outer surface 212b of the sidewall structure 212 to the inner surface 212c of the sidewall structure 212. As the first region 218c of the through-hole 218 extends from the outer surface 212b of the sidewall structure 212 to the inner surface 212c of the sidewall structure 212, the first region 218c of the through- hole 218 may transmit audio output from a speaker (e.g., a speaker 230 of FIG. 2B) to outside of the electronic device 200.

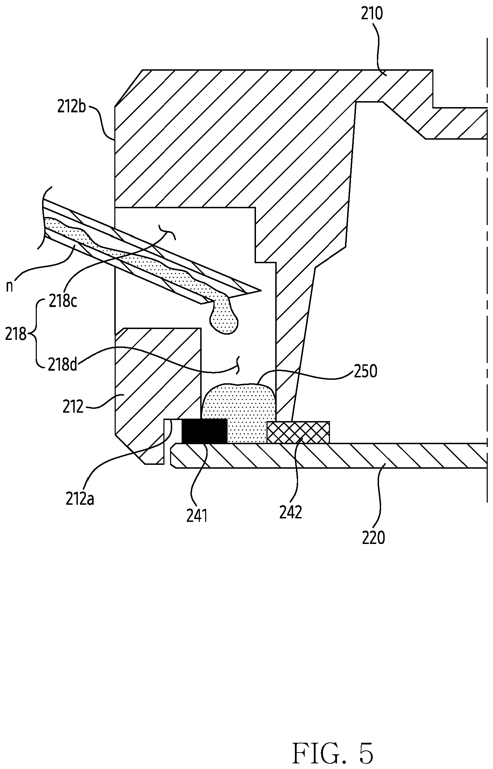

FIG. 5 is a cross-sectional view illustrating an example in which an electronic device according to an exemplary embodiment is cut.

Since an electronic device 200 of FIG. 5 may be the electronic device 200 in which an internal structure of a through-hole 218 is changed in the electronic device 200 of FIG. 4, an overlapping description is omitted.

Referring to FIG. 5, according to an embodiment, the through-hole 218 may include a first region 218c and a second region 218d. The first region 218c may extend from an outer surface 212b of a sidewall structure 212 in a direction (e.g., +y direction) perpendicular to the outer surface 212b. The second region 218d may extend from the first region 218c to a supporting surface 212a in a direction perpendicular to the first region 218c. For example, the second region 218d may extend from the first region 218c to the supporting surface 212a in a direction perpendicular to the supporting surface 212a.

According to an embodiment, when the electronic device 200 is manufactured, a solution for forming the sealing member 250 may be flowed in between a first adhesive member 241 and a second adhesive member 242 through the through-hole 218 in a state where a display 220 is disposed on the supporting surface 212a. For example, the solution for forming the sealing member 250 may be flowed into the through-hole 218 through a needle n inserted into the through-hole 218. As the solution flowed into the through-hole 218 solidifies, the sealing member 250 connecting the first adhesive member 241 and the second adhesive member 242 may be formed.

As described above, the electronic device 200 according to an embodiment may provide a structure in which the first adhesive member 241 and the second adhesive member 242 are easily coupled by the through-hole 218 connecting the outer surface 212b of the sidewall structure 212 and the supporting surface 212a.

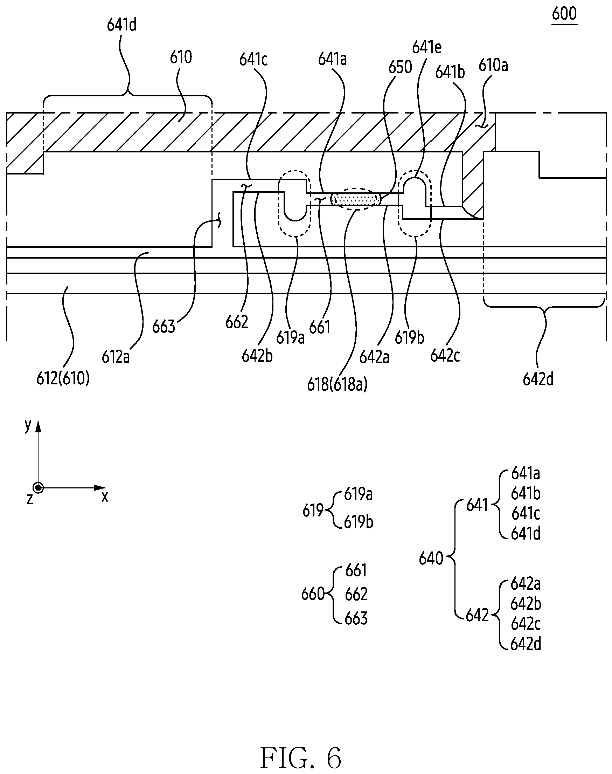

FIG. 6 is a top plain view of a housing of an electronic device according to an embodiment.

Referring to FIG. 6, an electronic device 600 according to an embodiment may include a housing 610, a plurality of adhesive members 640, a sealing member 650, and/or at least one flow path 660. Since the housing 610, the plurality of adhesive members 640, and the sealing member 650 of FIG. 6 may be substantially the same as a housing 210, a plurality of adhesive members 240, and a sealing member 250 of FIGS. 2A, 2B, and 2C, respectively, an overlapping description is omitted.

According to an embodiment, the housing 610 may include an inner space 610a, a sidewall structure 612, a through-hole 618, and at least one accommodating groove 619. Since the inner space 610a, the sidewall structure 612, and the through-hole 618 of FIG. 6 may be substantially the same as an inner space 210a, a sidewall structure 212, and a through-hole 218 of FIGS. 2A, 2B, and 2C, an overlapping description is omitted.

According to an embodiment, the sidewall structure 212 may include a supporting surface 612a and an outer surface. Since the supporting surface 612a and the outer surface of FIG. 6 may be substantially the same as the supporting surface 212a and the outer surface 212b of FIGS. 2A, 2B, and 2C, an overlapping description is omitted.

According to an embodiment, when the electronic device 600 is manufactured, the at least one accommodating groove 619 may prevent a solution for forming the sealing member 650 from being transmitted to outside of the supporting surface 612a. For example, when the electronic device 600 is manufactured, the at least one accommodating groove 619 may accommodate the solution for forming the sealing member 650 transmitted to outside of the through-hole 618. The solution accommodated in the at least one accommodating groove 619 may be solidified in the at least one accommodating groove 619. As the solution for forming the sealing member 650 is solidified in the at least one accommodating groove 619, it may not be transmitted to the outside of the supporting surface 612a. According to an embodiment, the at least one accommodating groove 619 may be formed by recessing the supporting surface 612a inward. According to an embodiment, the at least one accommodating groove 619 may be spaced apart from the through-hole 618. For example, the at least one accommodating groove 619 may include a first accommodating groove 619a spaced apart from the through-hole 618 in a direction (e.g., -x direction) opposite to a first direction and a second accommodating groove 619b spaced apart from the through-hole 618 in the first direction (e.g., +x direction). The second accommodating groove 619b may face the first accommodating groove 619a. According to an embodiment, the first accommodating groove 619a and the second accommodating groove 619b may be symmetrical to each other with respect to the through-hole 618. The through-hole 618 may be disposed between the first accommodating groove 619a and the second accommodating groove 619b.

According to an embodiment, the plurality of adhesive members 640 may include a first adhesive member 641 and a second adhesive member 642. The first adhesive member 641 may be disposed on a part of the supporting surface 612a. The second adhesive member 642 may be disposed on another part of the supporting surface 612a and may be spaced apart from the first adhesive member 641. The first adhesive member 641 and the second adhesive member 642 may cover a part of one end 618a of the through-hole 618 disposed on the supporting surface 612a.

According to an embodiment, a part of at the least one accommodating groove 619 may be covered by the first adhesive member 641 and the second adhesive member 642. According to an embodiment, the first adhesive member 641 may include a first extending portion 641a, a second extending portion 641b, a third extending portion 641c, and a fourth extending portion 641d. The first extending portion 641a may cover a part of the one end 618a of the through-hole 618 disposed on the supporting surface 612a, the first accommodating groove 619a, and the second accommodating groove 619b. The second extending portion 641b may be connected to one end of the first extending portion 641a facing the second accommodating groove 619b. The second extending portion 641b may have a larger width than the first extending portion 641a. The second extending portion 641b may cover the second accommodating groove 619b. The third extending portion 641c may be connected to the other end of the first extending portion 641a facing the first accommodating groove 619a. The third extending portion 641c may have a smaller width than the first extending portion 641a. The third extending portion 641c may cover the first accommodating groove 619a. The fourth extending portion 641d may be connected to the third extending portion 641c and may have a larger width than the first extending portion 641a. For example, the fourth extending portion 641d may have a larger width than the second extending portion 641b.

According to an embodiment, a part of the first extending portion 641a may include a concave portion 641e overlapped the second accommodating groove 619b and extending along a periphery of the second accommodating groove 619b. For example, the concave portion 641e may correspond to a shape of a part of the periphery of the second accommodating groove 619b. The concave portion 641e may be formed by recessing a part of the first extending portion 641a overlapped the second accommodating groove 619b inward (e.g., +y direction) of the first extending portion 641a.

According to an embodiment, the second adhesive member 642 may be symmetrical to the first adhesive member 641 with respect to the through-hole 618. The second adhesive member 642 may include a fifth extending portion 642a, a sixth extending portion 642b, a seventh extending portion 642c, and an eighth extending portion 642d. The fifth extending portion 642a may cover a part of the one end 618a of the through-hole 618 disposed on the supporting surface 612a, the first accommodating groove 619a, and the second accommodating groove 619b. The sixth extending portion 642b may be connected to one end of the fifth extending portion 642a facing the first accommodating groove 619a. The sixth extending portion 642b may have a larger width than the fifth extending portion 642a. The sixth extending portion 642b may cover the first accommodating groove 619a. The seventh extending portion 642c may be connected to the other end of the fifth extending portion 642a facing the second accommodating groove 619b. The seventh extending portion 642c may have a smaller width than the fifth extending portion 642a. The seventh extending portion 642c may cover the second accommodating groove 619b. The eighth extending portion 642d is connected to the seventh extending portion 642c and may have a larger width than the fifth extending portion 642a. For example, the eighth extending portion 642d may have a larger width than the sixth extending portion 642b.

The at least one flow path 660 may be disposed between the first adhesive member 641 and the second adhesive member 642. According to an embodiment, the at least one flow path 660 may extend from the through-hole 618 between the first adhesive member 641 and the second adhesive member 642. According to an embodiment, the at least one flow path 660 may be bent between the first adhesive member 641 and the second adhesive member 642. The at least one flow path 660 may include a first flow path 661 extending between the through-hole 618 and the at least one accommodating groove 619, a second flow path 662 extending from the through-hole 618 to be parallel to the first flow path 661, and a third flow path 663 extending perpendicularly to the second flow path 662 from the second flow path 662. For example, the first flow path 661 may extend from the one end 618a of the through-hole 618 to the first accommodating groove 619a in the direction (e.g., the -x direction) opposite to the first direction. The second flow path 662 may extend from the first accommodating groove 619a in the direction opposite to the first direction. The second flow path 662 may extend along the third extending portion 641c. The third flow path 663 may extend perpendicular to the second flow path 662 along the fourth extending portion 641d.

According to an embodiment, the electronic device 600 may delay movement of the solution for forming the sealing member 650 on the supporting surface 612a by the at least one flow path 660 bent between the first adhesive member 641 and the second adhesive member 642. In case that the amount of the solution for forming the sealing member 650 flowed in through the through-hole 618 is excessively large, the solution may move on the supporting surface 612a. In case that the solution moves to the outside of the supporting surface 612a, damage to a speaker (e.g., a speaker 230 of FIG. 2B) may occur. As the at least one flow path 660 is bent, the solution moving along the second flow path 662 may pass through the second flow path 662, and may enter the third flow path 663, and then may collide with the fourth extending portion 641d. As the movement of the solution is delayed by the collision with the fourth extending portion 641d, the solution may be solidified in the at least one flow path 660.

As described above, the electronic device 600 according to an embodiment may provide a structure capable of preventing the solution for forming the sealing member 650 from being transmitted to the outside of the supporting surface 612a by the at least one accommodating groove 619. The electronic device 600 according to an embodiment may provide the structure capable of preventing the solution from being transmitted to the outside of the supporting surface 612a by delaying the movement of the solution for forming the sealing member 650 by the at least one flow path 660 bent between the first adhesive member 641 and the second adhesive member 642.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

## Claims

1. An electronic device (101, 200, 600) comprising:
a display (220);
a housing (210, 610) including:
a base (211),
a sidewall structure (212, 612) including:
a supporting surface (212a, 612a) supporting the display (220), and
an outer surface (212b, 612b) from the supporting surface (212a, 612a) of the sidewall structure (212, 612), the outer surface (212b, 612b) of the sidewall structure (212, 612) substantially perpendicular to the supporting surface (212a, 612a) of the sidewall structure (212, 612), and
a through-hole (218, 618), extending from the outer surface (212b, 612b) of the sidewall structure (212, 612) to the supporting surface (212a, 612a) of the sidewall structure (212, 612), including an end (218a, 618a) of the through-hole (218, 618) defined by the supporting surface (212a, 612a) of the sidewall structure (212, 612) to face a rear surface (220a) of the display (220), and another end (218b) of the through-hole (218, 618) defined by the outer surface (212b, 612b) of the sidewall structure (212, 612) substantially perpendicular to the supporting surface (212a, 612a) of the sidewall structure (212, 612);
a first adhesive member (241, 641), attaching the rear surface (220a) of the display (220) to the supporting surface (212a, 612a) of the sidewall structure (212, 612), covering a first portion of the end (218a, 618a) of the through-hole (218, 618) defined by the supporting surface (212a, 612a) of the sidewall structure (212, 612);
a second adhesive member (242, 642), attaching the rear surface (220a) of the display (220) to the supporting surface (212a, 612a) of the sidewall structure (212, 612), spaced apart from the first adhesive member (241, 641), and covering a second portion of the end (218a, 618a) of the through-hole (218, 618) defined by the supporting surface (212a, 612a) of the sidewall structure (212, 612); and
a sealing member (250, 650), filling at least a portion of the through-hole (218, 618), connecting the first adhesive member (241, 641) and the second adhesive member (242, 642).

2. The electronic device (101, 200, 600) of claim 1,
wherein the sidewall structure (212, 612) further includes: an inner surface (212c) opposite to the outer surface (212b, 612b) of the sidewall structure (212, 612), and at least one speaker hole (217), spaced apart from the through-hole (218, 618), extending from the outer surface (212b, 612b) of the sidewall structure (212, 612) to the inner surface (212c) of the sidewall structure (212, 612).

3. The electronic device (101, 200, 600) of claim 2,
wherein when viewed from the outside of the electronic device (101, 200, 600), a shape of the through-hole (218, 618) is the same with a shape of the at least one speaker hole (217).

4. The electronic device (101, 200, 600) of claim 2 or 3,
wherein the at least one speaker hole (217) includes: a first speaker hole (217a), and
a second speaker hole (217b) spaced apart from the first speaker hole (217a) by a first distance, and
wherein the other end (218b) of the through-hole (218, 618), defined by the outer surface (212b, 612b) of the sidewall structure (212, 612), is spaced apart from an end of the first speaker hole (217a) by the first distance, and
wherein the end of the first speaker hole (217a) is defined by the outer surface (212b, 612b) of the sidewall structure (212, 612).

5. The electronic device (101, 200, 600) of any one of claims 1 to 4,
wherein the through-hole (218, 618) includes: a first region (218c) extending from the outer surface (212b, 612b) of the sidewall structure (212, 612) in a direction inclined with respect to the outer surface (212b, 612b) of the sidewall structure (212, 612), and a second region (218d) extending from the first region (218c) of the through-hole (218, 618) to the supporting surface (212a, 612a) of the sidewall structure (212, 612) in a direction perpendicular to the supporting surface (212a, 612a) of the sidewall structure (212, 612).

6. The electronic device (101, 200, 600) of any one of claims 1 to 4,
wherein the through-hole (218, 618) includes: a first region (218c) extending from the outer surface (212b, 612b) of the sidewall structure (212, 612) in a direction perpendicular to the outer surface (212b, 612b) of the sidewall structure (212, 612), and a second region (218d) extending from the first region (218c) of the through-hole (218, 618) to the supporting surface (212a, 612a) of the sidewall structure (212, 612) in a direction perpendicular to the supporting surface (212a, 612a) of the sidewall structure (212, 612).

7. The electronic device (101, 200, 600) of any one of claims 1 to 6,
wherein the first adhesive member (241, 641) includes: a first extending portion (641a) covering the first portion of the end (218a, 618a) of the through-hole (218, 618) defined by the supporting surface (212a, 612a) of the sidewall structure (212, 612), and a second extending portion (641b), extending from the first extending portion (641a) of the first adhesive member (241, 641) in a direction away from the through-hole (218, 618), having a width wider than the first extending portion (641a),
wherein the second adhesive member (242, 642) includes: a third extending portion (641c), covering the second portion of the end (218a, 618a) of the through-hole (218, 618) defined by the supporting surface (212a, 612a) of the sidewall structure (212, 612), and a fourth extending portion (641d), extending from the third extending portion (641c) of the second adhesive member (242, 642) in a direction away from the through-hole (218, 618), having a width wider than the third extending portion (641c).

8. The electronic device (101, 200, 600) of any one of claims 1 to 7,
wherein the sidewall structure (212, 612) further includes: a first sidewall (213) and a second sidewall (214) surrounding the display (220) and perpendicular to each other,
wherein the first adhesive member (241, 641) extends along a portion of the first sidewall (213), and
wherein the second adhesive member (242, 642) extends along another portion of the first sidewall (213) and the second sidewall (214).

9. The electronic device (101, 200, 600) of any one of claims 1 to 8, further comprising at least one accommodating groove (619) disposed to the supporting surface (212a, 612a) and spaced apart from the through-hole (218, 618),
wherein a portion of the at least one accommodating groove (619) is covered by the first adhesive member (241, 641) and the second adhesive member (242, 642).

10. The electronic device (101, 200, 600) of claim 9,
wherein the at least one accommodating groove (619) includes: a first accommodating groove (619a) spaced apart from the through-hole (218, 618), and a second accommodating groove (619b), spaced apart from the through-hole (218, 618), facing the first accommodating groove (619a),
wherein the first adhesive member (241, 641) includes:
a first extending portion (641a) covering the first portion of the end (218a, 618a) of the through-hole (218, 618) defined by the supporting surface (212a, 612a) of the sidewall structure (212, 612), the first accommodating groove (619a), and the second accommodating groove (619b), a second extending portion (641b), connected to an end of the first extending portion (641a) facing the second accommodating groove (619b), having a width wider than the first extending portion (641a), a third extending portion (641c), connected to another end of the first extending portion (641a) facing the first accommodating groove (619a), having a width narrower than the first extending portion (641a), and a fourth extending portion (641d), connected to the third extending portion (641c), having a width wider than the first extending portion (641a), and
wherein the second adhesive member (242, 642) is symmetrical to the first adhesive member (241, 641) with respect to the through-hole (218, 618).

11. The electronic device (101, 200, 600) of claim 10,
wherein a portion of the first extending portion (641a) includes a concave portion, overlapping the second accommodating groove (619b), extending along a periphery of the second accommodating groove (619b).

12. The electronic device (101, 200, 600) of any one of claims 9 to 11, further comprising at least one flow path (660) disposed between the first adhesive member (241, 641) and the second adhesive member (242, 642),
wherein the at least one flow path (660) includes: a first flow path (661) extending between the through-hole (218, 618) and the at least one accommodating groove (619), a second flow path (662) extending from the at least one accommodating groove (619) to be parallel to the first flow path (661), and a third flow path (663) extending from the second flow path (662) perpendicularly to the second flow path (662).

13. The electronic device (101, 200, 600) of any one of claims 1 to 12,
wherein the first adhesive member (241, 641) and the second adhesive member (242, 642) include an adhesive material attaching the display (220) to the supporting surface (212a, 612a).

14. The electronic device (101, 200, 600) of any one of claims 1 to 13,
wherein the base (211) includes an accommodating surface (211a), parallel to the supporting surface (212a, 612a), facing the rear surface (220a) of the display (220), and
wherein the electronic device (101, 200, 600) further includes a speaker, configured to output audio, disposed on the accommodating surface (211a) of the base (211).

15. The electronic device (101, 200, 600) of any one of claims 1 to 14,
wherein the sidewall structure (212, 612) surrounds a periphery of the display (220).

## Patentansprüche

1. Elektronische Vorrichtung (101, 200, 600), die Folgendes umfasst:
eine Anzeige (220);
ein Gehäuse (210, 610), das Folgendes aufweist:
eine Basis (211),
eine Seitenwandstruktur (212, 612), die Folgendes aufweist:
eine die Anzeige (220) stützende Stützfläche (212a, 612a), und
eine sich von der Stützfläche (212a, 612a) der Seitenwandstruktur (212, 612) erstreckende äußere Oberfläche (212b, 612b), wobei die äußere Oberfläche (212b, 612b) der Seitenwandstruktur (212, 612) im Wesentlichen senkrecht zu der Stützfläche (212a, 612a) der Seitenwandstruktur (212, 612) verläuft, und
ein Durchgangsloch (218, 618), das sich von der äußere Oberfläche (212b, 612b) der Seitenwandstruktur (212, 612) zu der Stützfläche (212a, 612a) der Seitenwandstruktur (212, 612) erstreckt und Folgendes aufweist: ein Ende (218a, 618a) des Durchgangslochs (218, 618), das durch die Stützfläche (212a, 612a) der Seitenwandstruktur (212, 612) definiert ist, so dass es zu einer hinteren Oberfläche (220a) der Anzeige (220) zeigt, und ein anderes Ende (218b) des Durchgangslochs (218, 618), das durch die im Wesentlichen senkrecht zu der Stützfläche (212a, 612a) der Seitenwandstruktur (212, 612) verlaufende äußere Oberfläche (212b, 612b) der Seitenwandstruktur (212, 612) definiert ist;
ein erstes Haftelement (241, 641), mit dem die hintere Oberfläche (220a) der Anzeige (220) an der Stützfläche (212a, 612a) der Seitenwandstruktur (212, 612) befestigt wird und das einen ersten Abschnitt des durch die Stützfläche (212a, 612a) der Seitenwandstruktur (212, 612) definierten Endes (218a, 612a) des Durchgangslochs (218, 618) abdeckt;
ein zweites Haftelement (242, 642), mit dem die hintere Oberfläche (220a) der Anzeige (220) an der Stützfläche (212a, 612a) der Seitenwandstruktur (212, 612) befestigt wird und das von dem ersten Haftelement (241, 641) beabstandet ist und einen zweiten Abschnitt des durch die Stützfläche (212a, 612a) der Seitenwandstruktur (212, 612) definierten Endes (218a, 618a) des Durchgangslochs (218, 618) abdeckt; und
ein Dichtungselement (250, 650), das zumindest einen Teil des Durchgangslochs (218, 618) ausfüllt und das erste Haftelement (241, 641) und das zweite Haftelement (242, 642) verbindet

2. Elektronische Vorrichtung (101, 200, 600) nach Anspruch 1,
wobei die Seitenwandstruktur (212, 612) ferner Folgendes aufweist: eine innere Oberfläche (212c) gegenüber der äußeren Oberfläche (212b, 612b) der Seitenwandstruktur (212, 612), und zumindest ein Lautsprecherloch (217), das von dem Durchgangsloch (218, 618) beabstandet ist und sich von der äußeren Oberfläche (212b, 612b) der Seitenwandstruktur (212, 612) zu der inneren Oberfläche (212c) der Seitenwandstruktur (212, 612) erstreckt.

3. Elektronische Vorrichtung (101, 200, 600) nach Anspruch 2,
wobei, bei Betrachtung von außerhalb der elektronischen Vorrichtung (101, 200, 600), die Form des Durchgangslochs (218, 618) der Form des zumindest einen Lautsprecherlochs (217) entspricht.

4. Elektronische Vorrichtung (101, 200, 600) nach Anspruch 2 oder 3,
wobei das zumindest eine Lautsprecherloch (217) Folgendes aufweist:
ein erstes Lautsprecherloch (217a), und
ein von dem ersten Lautsprecherloch (217a) um einen ersten Abstand beabstandetes zweites Lautsprecherloch (217b), und
wobei das durch die äußere Oberfläche (212b, 612b) der Seitenwandstruktur (212, 612) definierte andere Ende (218b) des Durchgangslochs (218, 618) von einem Ende des ersten Lautsprecherlochs (217a) um den ersten Abstand beabstandet ist, und
wobei das Ende des ersten Lautsprecherlochs (217a) durch die äußere Oberfläche (212b, 612b) der Seitenwandstruktur (212, 612) definiert ist.

5. Elektronische Vorrichtung (101, 200, 600) nach einem der Ansprüche 1 bis 4,
wobei das Durchgangsloch (218, 618) Folgendes aufweist: einen ersten Bereich (218c), der sich von der äußeren Oberfläche (212b, 612b) der Seitenwandstruktur (212, 612) in einer in Bezug auf die äußere Oberfläche (212b, 612b) der Seitenwandstruktur (212, 612) geneigten Richtung erstreckt, und einen zweiten Bereich (218d), der sich von dem ersten Bereich (218c) des Durchgangslochs (218, 618) zu der Stützfläche (212a, 612a) der Seitenwandstruktur (212, 612) in einer senkrecht zu der Stützfläche (212a, 612a) der Seitenwandstruktur (212, 612) verlaufenden Richtung erstreckt.

6. Elektronische Vorrichtung (101, 200, 600) nach einem der Ansprüche 1 bis 4,
wobei das Durchgangsloch (218, 618) Folgendes aufweist: einen ersten Bereich (218c), der sich von der äußeren Oberfläche (212b, 612b) der Seitenwandstruktur (212, 612) in einer senkrecht zu der Stützfläche (212a, 612a) der Seitenwandstruktur (212, 612) verlaufenden Richtung erstreckt, und einen zweiten Bereich (218d), der sich von dem ersten Bereich (218c) des Durchgangslochs (218, 618) zu der Stützfläche (212a, 612a) der Seitenwandstruktur (212, 612) in einer senkrecht zu der Stützfläche (212a, 612a) der Seitenwandstruktur (212, 612) verlaufenden Richtung erstreckt.

7. Elektronische Vorrichtung (101, 200, 600) nach einem der Ansprüche 1 bis 6,
wobei das erste Haftelement (241, 641) Folgendes aufweist: einen ersten Erstreckungsabschnitt (641a), der den ersten Abschnitt des durch die Stützfläche (212a, 612a) der Seitenwandstruktur (212, 612) definierten Endes (218a, 612a) des Durchgangslochs (218, 618) abdeckt, und einen zweiten Erstreckungsabschnitt (641b), der sich von dem ersten Erstreckungsabschnitt (641a) des ersten Haftelements (241, 641) in einer Richtung weg von dem Durchgangsloch (218, 618) erstreckt und eine Breite aufweist, die größer ist als die des ersten Erstreckungsabschnitts (641a);
wobei das zweite Haftelement (242, 642) Folgendes aufweist: einen dritten Erstreckungsabschnitt (641c), der den zweiten Abschnitt des Endes (218a, 618a) des Durchgangslochs (218, 618), das durch die Stützfläche (212a, 612a) der Seitenwandstruktur (212, 612) definiert ist, abdeckt, und einen vierten Erstreckungsabschnitt (641d), der sich von dem dritten Erstreckungsabschnitt (641c) des zweiten Haftelements (242, 642) in einer Richtung weg von dem Durchgangsloch (218, 618) erstreckt und eine Breite aufweist, die größer ist als die des dritten Erstreckungsabschnitts (641c).

8. Elektronische Vorrichtung (101, 200, 600) nach einem der Ansprüche 1 bis 7,
wobei die Seitenwandstruktur (212, 612) ferner Folgendes aufweist: eine erste Seitenwand (213) und eine zweite Seitenwand (214), die die Anzeige (220) umgeben und senkrecht zueinander verlaufen,
wobei sich das erste Haftelement (241, 641) entlang eines Abschnitts der ersten Seitenwand (213) erstreckt und
wobei sich das zweite Haftelement (242, 642) entlang eines anderen Abschnitts der ersten Seitenwand (213) und der zweiten Seitenwand (214) erstreckt.

9. Elektronische Vorrichtung (101, 200, 600) nach einem der Ansprüche 1 bis 8, ferner umfassend zumindest eine in der Stützfläche (212a, 612a) angeordnete und von dem Durchgangsloch (218, 618) beabstandete Aufnahmenut (619),
wobei ein Abschnitt der zumindest einen Aufnahmenut (619) durch das erste Haftelement (241, 641) und das zweite Haftelement (242, 642) bedeckt ist.

10. Elektronische Vorrichtung (101, 200, 600) nach Anspruch 9,
wobei die zumindest eine Aufnahmenut (619) Folgendes aufweist: eine von dem Durchgangsloch (218, 618) beabstandete erste Aufnahmenut (619a) und eine von dem Durchgangsloch (218, 618) beabstandete und zu der ersten Aufnahmenut (619a) zeigende zweite Aufnahmenut (619b),
wobei das erste Haftelement (241, 641) Folgendes aufweist:
einen ersten Erstreckungsabschnitt (641a), der den ersten Abschnitt des durch die Stützfläche (212a, 612a) der Seitenwandstruktur (212, 612), die erste Aufnahmenut (619a) und die zweite Aufnahmenut (619b) definierten Endes (218a, 618a) des Durchgangslochs (218, 618) abdeckt; einen zweiten Erstreckungsabschnitt (641b), der mit einem Ende des ersten Erstreckungsabschnitts (641a) verbunden ist, das zu der zweiten Aufnahmenut (619b) zeigt und eine Breite aufweist, die größer ist als die des ersten Erstreckungsabschnitts (641a); einen dritten Erstreckungsabschnitt (641c), der mit einem anderen Ende des ersten Erstreckungsabschnitts (641a) verbunden ist, das zu der ersten Aufnahmenut (619a) zeigt, und eine Breite aufweist, die kleiner ist als die des ersten Erstreckungsabschnitts (641a); und einen vierten Erstreckungsabschnitt (641d), der mit dem dritten Erstreckungsabschnitt (641c) verbunden ist und eine Breite aufweist, die größer ist als die des ersten Erstreckungsabschnitts (641a), und
wobei das zweite Haftelement (242, 642) in Bezug auf das Durchgangsloch (218, 618) symmetrisch zu dem ersten Haftelement (241, 641) ist.

11. Elektronische Vorrichtung (101, 200, 600) nach Anspruch 10,
wobei ein Abschnitt des ersten Erstreckungsabschnitts (641a) einen konkaven Abschnitt aufweist, der mit der zweiten Aufnahmenut (619b) überlappt und sich entlang eines Umfangs der zweiten Aufnahmenut (619b) erstreckt.

12. Elektronische Vorrichtung (101, 200, 600) nach einem der Ansprüche 9 bis 11, ferner umfassend zumindest einen Strömungspfad (660), der zwischen dem ersten Haftelement (241, 641) und dem zweiten Haftelement (242, 642) angeordnet ist,
wobei der zumindest eine Strömungspfad (660) Folgendes aufweist: einen ersten Strömungspfad (661), der sich zwischen dem Durchgangsloch (218, 618) und der zumindest einen Aufnahmenut (619) erstreckt, einen zweiten Strömungspfad (662), der sich von der zumindest einen Aufnahmenut (619) parallel zu dem ersten Strömungspfad (661) erstreckt, und einen dritten Strömungspfad (663), der sich von dem zweiten Strömungspfad (662) senkrecht zu dem zweiten Strömungspfad (662) erstreckt.

13. Elektronische Vorrichtung (101, 200, 600) nach einem der Ansprüche 1 bis 12,
wobei das erste Haftelement (241, 641) und das zweite Haftelement (242, 642) ein Haftmaterial aufweisen, mit dem die Anzeige (220) an der Stützfläche (212a, 612a) befestigt wird.

14. Elektronische Vorrichtung (101, 200, 600) nach einem der Ansprüche 1 bis 13,
wobei die Basis (211) eine Aufnahmeoberfläche (211a) aufweist, die parallel zu der Stützfläche (212a, 612a) ist und zu der hinteren Oberfläche (220a) der Anzeige (220) zeigt, und
wobei die elektronische Vorrichtung (101, 200, 600) ferner einen Lautsprecher aufweist, der zur Ausgabe von Audio konfiguriert ist und auf der Aufnahmeoberfläche (211a) der Basis (211) angeordnet ist.

15. Elektronische Vorrichtung (101, 200, 600) nach einem der Ansprüche 1 bis 14,
wobei die Seitenwandstruktur (212, 612) einen Umfang der Anzeige (220) umgibt.

## Revendications

1. Appareil électronique (101, 200, 600) comprenant :
un écran (220) ;
un boîtier (210, 610) comprenant :
une base (211),
une structure de paroi latérale (212, 612) comprenant :
une surface de support (212a, 612a) supportant l'écran (220), et
une surface extérieure (212b, 612b) partant de la surface de support (212a, 612a) de la structure de paroi latérale (212, 612), la surface extérieure (212b, 612b) de la structure de paroi latérale (212, 612) étant sensiblement perpendiculaire à la surface de support (212a, 612a) de la structure de paroi latérale (212, 612), et
un trou traversant (218, 618) s'étendant à partir de la surface extérieure (212b, 612b) de la structure de paroi latérale (212, 612) jusqu'à la surface de support (212a, 612a) de la structure de paroi latérale (212, 612) ; une extrémité (218a, 618a) du trou traversant (218, 618) étant définie par la surface de support (212a, 612a) de la structure de paroi latérale (212, 612) pour faire face à une surface arrière (220a) de l'écran (220), et une autre extrémité (218b) du trou traversant (218, 618) étant définie par la surface extérieure (212b, 612b) de la structure de paroi latérale (212, 612) sensiblement perpendiculaire à la surface de support (212a, 612a) de la structure de paroi latérale (212, 612) ;
un premier élément adhésif (241, 641), fixant la surface arrière (220a) de l'écran (220) à la surface de support (212a, 612a) de la structure de paroi latérale (212, 612) et recouvrant une première portion de l'extrémité (218a, 618a) du trou traversant (218, 618) définie par la surface de support (212a, 612a) de la structure de paroi latérale (212, 612) ;
un deuxième élément adhésif (242, 642), fixant la surface arrière (220a) de l'écran (220) à la surface de support (212a, 612a) de la structure de paroi latérale (212, 612), espacé du premier élément adhésif (241, 641) et recouvrant une deuxième portion de l'extrémité (218a, 618a) du trou traversant (218, 618) définie par la surface de support (212a, 612a) de la structure de paroi latérale (212, 612) ; et
un élément d'étanchéité (250, 650) comblant au moins une partie du trou traversant (218, 618) et reliant le premier élément adhésif (241, 641) et le deuxième élément adhésif (242, 642).

2. Appareil électronique (101, 200, 600) selon la revendication 1,
dans lequel la structure de paroi latérale (212, 612) comporte en outre : une surface intérieure (212c) opposée à la surface extérieure (212b, 612b) de la structure de paroi latérale (212, 612), et au moins un trou de haut-parleur (217) espacé du trou traversant (218, 618) et s'étendant à partir de la surface extérieure (212b, 612b) de la structure de paroi latérale (212, 612) jusqu'à la surface intérieure (212c) de la structure de paroi latérale (212, 612).

3. Appareil électronique (101, 200, 600) selon la revendication 2,
dans lequel, vu depuis l'extérieur de l'appareil électronique (101, 200, 600), la forme du trou traversant (218, 618) est la même que la forme de l'au moins un trou de haut-parleur (217).

4. Appareil électronique (101, 200, 600) selon la revendication 2 ou 3,
dans lequel l'au moins un trou de haut-parleur (217) comprend :
un premier trou de haut-parleur (217a), et
un deuxième trou de haut-parleur (217b) espacé du premier trou de haut-parleur (217a) selon une première distance ; et
dans lequel l'autre extrémité (218b) du trou traversant (218, 618), définie par la surface extérieure (212b, 612b) de la structure de paroi latérale (212, 612), est espacée d'une extrémité du premier trou de haut-parleur (217a) selon la première distance, et
dans lequel l'extrémité du premier trou de haut-parleur (217a) est définie par la surface extérieure (212b, 612b) de la structure de paroi latérale (212, 612).

5. Appareil électronique (101, 200, 600) selon l'une quelconque des revendications 1 à 4, dans lequel le trou traversant (218, 618) comprend : une première région (218c) s'étendant à partir de la surface extérieure (212b, 612b) de la structure de paroi latérale (212, 612) dans une direction inclinée par rapport à la surface extérieure (212b, 612b) de la structure de paroi latérale (212, 612), et une deuxième région (218d) s'étendant à partir de la première région (218c) du trou traversant (218, 618) jusqu'à la surface de support (212a, 612a) de la structure de paroi latérale (212, 612) dans une direction perpendiculaire à la surface de support (212a, 612a) de la structure de paroi latérale (212, 612).

6. Appareil électronique (101, 200, 600) selon l'une quelconque des revendications 1 à 4, dans lequel le trou traversant (218, 618) comprend : une première région (218c) s'étendant depuis la surface extérieure (212b, 612b) de la structure de paroi latérale (212, 612) dans une direction perpendiculaire à la surface extérieure (212b, 612b) de la structure de paroi latérale (212, 612), et une deuxième région (218d) s'étendant depuis la première région (218c) du trou traversant (218, 618) jusqu'à la surface de support (212a, 612a) de la structure de paroi latérale (212, 612) dans une direction perpendiculaire à la surface de support (212a, 612a) de la structure de paroi latérale (212, 612).

7. Appareil électronique (101, 200, 600) selon l'une quelconque des revendications 1 à 6,
dans lequel le premier élément adhésif (241, 641) comporte : une première portion d'extension (641a) recouvrant la première portion de l'extrémité (218a, 618a) du trou traversant (218, 618) définie par la surface de support (212a, 612a) de la structure de paroi latérale (212, 612), et une deuxième portion d'extension (641b) s'étendant à partir de la première portion d'extension (641a) du premier élément adhésif (241, 641) dans une direction s'éloignant du trou traversant (218, 618), et dont la largeur est supérieure à celle de la première portion d'extension (641a) ;
dans lequel le deuxième élément adhésif (242, 642) comprend : une troisième portion d'extension (641c) recouvrant la deuxième portion de l'extrémité (218a, 618a) du trou traversant (218, 618) définie par la surface de support (212a, 612a) de la structure de paroi latérale (212, 612), et une quatrième portion d'extension (641d) s'étendant à partir de la troisième portion d'extension (641c) du deuxième élément adhésif (242, 642) dans une direction s'éloignant du trou traversant (218, 618), et dont la largeur est supérieure à la troisième portion d'extension (641c).

8. Appareil électronique (101, 200, 600) selon l'une quelconque des revendications 1 à 7, dans lequel la structure de paroi latérale (212, 612) comprend en outre : une première paroi latérale (213) et une deuxième paroi latérale (214) entourant l'écran (220) et perpendiculaires l'une à l'autre,
dans lequel le premier élément adhésif (241, 641) s'étend le long d'une portion de la première paroi latérale (213), et
dans lequel le deuxième élément adhésif (242, 642) s'étend le long d'une autre portion de la première paroi latérale (213) et de la deuxième paroi latérale (214).

9. Appareil électronique (101, 200, 600) selon l'une quelconque des revendications 1 à 8, comprenant en outre au moins une rainure de réception (619) disposée dans la surface de support (212a, 612a) et espacée du trou traversant (218, 618),
une portion de ladite au moins une rainure de réception (619) étant recouverte par le premier élément adhésif (241, 641) et le deuxième élément adhésif (242, 642).

10. Appareil électronique (101, 200, 600) selon la revendication 9,
dans lequel l'au moins une rainure de réception (619) comprend : une première rainure de réception (619a) espacée du trou traversant (218, 618), et une deuxième rainure de réception (619b) espacée du trou traversant (218, 618) et faisant face à la première rainure de réception (619a),
dans lequel le premier élément adhésif (241, 641) comprend :
une première portion d'extension (641a) recouvrant la première portion de l'extrémité (218a, 618a) du trou traversant (218, 618) définie par la surface de support (212a, 612a) de la structure de paroi latérale (212, 612), la première rainure de réception (619a) et la deuxième rainure de réception (619b) ; une deuxième portion d'extension (641b) reliée à une extrémité de la première portion d'extension (641a) faisant face à la deuxième rainure de réception (619b) et dont la largeur est supérieure à celle de la première portion d'extension (641a) ; une troisième portion d'extension (641c) reliée à une autre extrémité de la première portion d'extension (641a) faisant face à la première rainure de réception (619a) et dont la largeur est inférieure à celle de la première portion d'extension (641a) ; et une quatrième portion d'extension (641d) reliée à la troisième portion d'extension (641c) et dont la largeur est supérieure à celle de la première portion d'extension (641a), et
dans lequel le deuxième élément adhésif (242, 642) est symétrique au premier élément adhésif (241, 641) par rapport au trou traversant (218, 618).

11. Appareil électronique (101, 200, 600) selon la revendication 10,
dans lequel une portion de la première portion d'extension (641a) comprend une portion concave chevauchant la deuxième rainure de réception (619b) et s'étendant le long d'une périphérie de la deuxième rainure de réception (619b).

12. Appareil électronique (101, 200, 600) selon l'une quelconque des revendications 9 à 11, comprenant en outre au moins un trajet d'écoulement (660) disposé entre le premier élément adhésif (241, 641) et le deuxième élément adhésif (242, 642),
dans lequel l'au moins un trajet d'écoulement (660) comprend : un premier trajet d'écoulement (661) s'étendant entre le trou traversant (218, 618) et l'au moins une rainure de réception (619), un deuxième trajet d'écoulement (662) s'étendant à partir de l'au moins une rainure de réception (619) parallèlement au premier trajet d'écoulement (661), et un troisième trajet d'écoulement (663) s'étendant à partir du deuxième trajet d'écoulement (662) perpendiculairement au deuxième trajet d'écoulement (662).

13. Appareil électronique (101, 200, 600) selon l'une quelconque des revendications 1 à 12, dans lequel le premier élément adhésif (241, 641) et le deuxième élément adhésif (242, 642) comprennent un matériau adhésif fixant l'écran (220) à la surface de support (212a, 612a).

14. Appareil électronique (101, 200, 600) selon l'une quelconque des revendications 1 à 13, dans lequel la base (211) comprend une surface de réception (211a) parallèle à la surface de support (212a, 612a) et faisant face à la surface arrière (220a) de l'écran (220) ;
ledit appareil électronique (101, 200, 600) comprenant en outre un haut-parleur configuré pour émettre de l'audio et disposé sur la surface de réception (211a) de la base (211).

15. Appareil électronique (101, 200, 600) selon l'une quelconque des revendications 1 à 14, dans lequel la structure de paroi latérale (212, 612) entoure une périphérie de l'écran (220).
